# EUROPEAN PATENT SPECIFICATION

(11) **EP 2 145 450 B1**
(45) Date of publication and mention of the grant of the patent: **25.07.2018**
(21) Application number: 08750942.8
(22) Date of filing: 14.05.2008
(51) Int. Cl.: H04L 29/06

(54) **A NODE AND METHOD TO PROVIDE AND KEEP REAL-TIME UP-TO-DATE DATA IN A DISTRIBUTED HASH TABLE**
KNOTEN UND VERFAHREN ZUR BEREITSTELLUNG UND AUFRECHTERHALTUNG AKTUELLER ECHTZEIT-DATEN IN EINER VERTEILTEN HASH-TABELLE
NOEUD ET PROCEDE PERMETTANT DE FOURNIR ET DE CONSERVER DES DONNEES MISES A JOUR EN TEMPS REEL DANS UNE TABLE DE HACHAGE REPARTIE

(30) Priority: 17.05.2007 US 798942
(43) Date of publication of application: 20.01.2010
(73) Proprietor: Nokia Technologies Oy, 02610 Espoo (FI)
(72) Inventor: MATUSZEWSKI, Marcin, FIN-02770 Espoo (FI); GARCIA-MARTIN, Miguel A., FIN-00690 Helsinki (FI)
(74) Representative: Ruuskanen, Juha-Pekka
(86) International application number: PCT/IB2008/001201
(87) International publication number: WO 2008/142511

(56) References cited:
- WO-A-03/084186
- US-A1- 2005 251 577
- JUNJIE JIANG ET AL: "BiChord: An Improved Approach for Lookup Routing in Chord" ADVANCES IN DATABASES AND INFORMATION SYSTEMS LECTURE NOTES IN COMPUTER SCIENCE;;LNCS, SPRINGER, BERLIN, DE, vol. 3631, 1 January 2005 (2005-01-01), pages 338-348, XP019017695 ISBN: 978-3-540-28585-4
- BASET H SCHULZRINNE COLUMBIA UNIVERSITY M MATUSZEWSKI NOKIA S: "Peer-to-Peer Protocol (P2PP); draft-baset-p2psip-p2pp-01.txt" IETF STANDARD-WORKING-DRAFT, INTERNET ENGINEERING TASK FORCE, IETF, CH, no. 1, 19 November 2007 (2007-11-19), XP015052605 ISSN: 0000-0004
- BRYAN/SIPEERIO-EDITOR S BASET/COLUMBIA U M MATUSZEWSKI/NOKIA H SINNREICH/ADOBE D: "P2PSIP Protocol Framework and Requirements; draft-bryan-p2psip-requir ements-00.txt" IETF STANDARD-WORKING-DRAFT, INTERNET ENGINEERING TASK FORCE, IETF, CH, 1 June 2007 (2007-06-01), XP015050798 ISSN: 0000-0004

## Description

### 1. BACKGROUND OF THE INVENTION

### Field of the Invention

The present invention relates to a node and method providing and maintaining real-time up-to-date data in a distributed hash table network architecture, in particular, the present invention provides a node and method for configuring, providing, and maintaining real-time up-to-date peer identification and Internet protocol address mapping information in peer nodes of a distributed hash table network architecture.

### Description of the Related Art

One family of peer-to-peer overlay protocols is referred to as Distributed Hash Tables (DHT), which provides routing and object location functionality for peer-to-peer applications. The DHT is a structured overlay network architecture that provides a flexible approach for connecting multiple nodes in a communications network. A DHT protocol provides an efficient and easily implemented substrate, referred to as a structured overlay, for building scalable and self-organizing distributed applications. A structured overlay maps keys that identify application data to overlay nodes that are responsible for managing that data. At the most basic level, the DHT allows a group of distributed hosts to collectively manage a mapping from keys to data values, without any fixed hierarchy, and with very little human assistance. This building block can then be used to ease the implementation of a diverse variety of peer-to-peer applications such as file sharing services, DNS replacements, web caches, etc.

The DHT allows for locating any piece of data stored in the overlay network using a limited number of messages, typically log(N) messages. The nodes that form an overlay network are called peers. Each peer gets a unique peer identification (ID), sometimes also called node ID, when it joins the DHT. The DHT is typically organized in a ring topology. A hash table's keyspace may be circular, and peer IDs may be 128-bit unsigned integers representing position in the circular keyspace. Typically, peer IDs are created by hashing the peer IP address. Therefore, if the IP address of the peer changes, the peer ID changes as well. In the context of the present document "IP Address" may include in addition to, or instead of, an IP address also transmission control protocol (TCP) and/or user datagram protocol (UDP) port numbers.
United States patent application publication number US 2005/251577 A1 relates to an end host in a peer-to-peer system that stores identifiers for both its peers and the neighbors of its peers. International patent application publication number WO 03/084186 A relates to persisting identifiers and relationships in a transient peer-to-peer networking environment where communities have ad hoc participants.
Junjie Jiang et al: "BiChord: An Improved Approach for Lookup Routing in Chord", XP019017695, relates to modelling the topology of Chord (a representative peer to peer lookup service) as a bidirectional graph.

### SUMMARY OF THE INVENTION

The invention is defined by the appended claims.

### BRIEF DESCRIPTION OF THE DRAWINGS

Further embodiments, details, advantages and modifications of the present invention will become apparent from the following detailed description of the preferred embodiments which is to be taken in conjunction with the accompanying drawings, in which:
FIG. 1 illustrates a distributed hash table (DHT) ring and a neighbor table of one of the nodes in the DHT ring.
FIG. 2 illustrates the DHT ring and a finger table of one of the nodes in the DHT.
FIG. 3 illustrates a reverse finger table at a node in the DHT ring, in accordance with an embodiment of the present invention.
FIG. 4 illustrates a configuration in which a number of peers subscribe to a peer event state package of a peer, in accordance with an embodiment of the present invention.
FIG. 5 illustrates a configuration to notify peers after acquiring a new IP address by the peer, in accordance with an embodiment of the present invention.
FIG. 6 illustrates an alternative session initiation protocol mechanism to update reverse finger peers, in accordance with an embodiment of the present invention.
FIG. 7 illustrates a session initiation protocol mechanism to update neighboring peers after a change of IP address, in accordance with an embodiment of the present invention.
FIG. 8 illustrates a method in which nodes subscribe to a node event state package of a node, in accordance with an embodiment of the present invention.
FIG. 9 illustrates a method to configure a reverse finger table, in accordance with an embodiment of the present invention.
FIG. 10 illustrates a method to notify of neighboring nodes after acquiring a new address by the node, in accordance with an embodiment of the present invention.
FIG. 11 illustrates a method to receive a new address of a neighboring node and update a neighbor table, in accordance with an embodiment of the present invention.

### DETAILED DESCRIPTION OF THE PREFERRED EMBODIMENTS

Reference will now be made in detail to preferred embodiments of the present invention, examples of which are illustrated in the accompanying drawings.

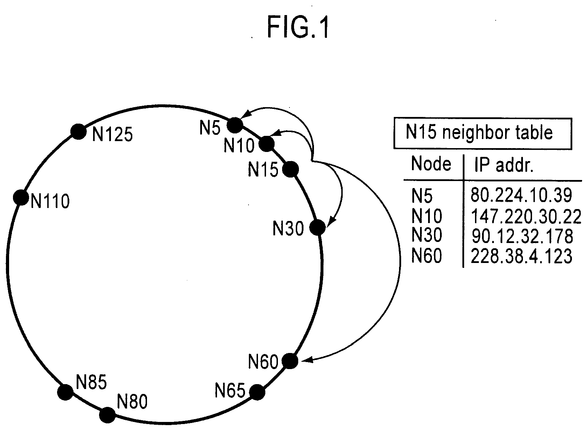

FIG. 1 illustrates a distributed hash table (DHT) ring and a neighbor table of a node (node 15, (N15)) in the DHT ring. Data stored in the DHT is indexed using data identifiers (IDs). The data IDs are distributed among the DHT nodes. Each DHT node stores a subset of the data IDs.

Depending on the arrangement of the DHT, each node in the DHT ring may have two direct neighbors: a predecessor peer and a successor peer. In some instances, in order to increase the reliability of the network, a peer may be linked to one, two, three, or more predecessors and/or one, two, three, or more successors. A position or place in the DHT ring may be determined using a peer identification (ID). The successor peer is a node whose peer ID may be defined as the next one in the DHT ring when moving clockwise (N30, N60, N65, etc.). The predecessor of a node may be defined as the next node in the DHT ring when moving counter-clockwise (N10 and N5). The number of predecessors and successors that the peer may be linked to may be kept to a short number. Each peer may keep track of its predecessor and successor by sending some type of keep-alive messages. For illustrative purposes, the node's predecessors and successors may be referred to collectively as neighbors. Each peer stores Internet protocol (IP) addresses (or/and other connectivity information) of their neighbors. This allows the node to contact its predecessors and successors.

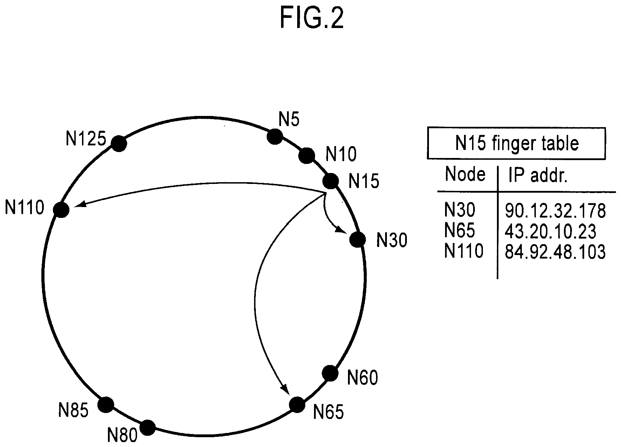

Additionally, each peer also maintains a routing table, sometimes called a finger table, which includes a list of peers and corresponding IP addresses (or/and other connectivity information) in the overlay DHT network (the number of peers in the list is typically much smaller than a number of peers in the overlay DHT network). FIG. 2 illustrates the DHT ring and a finger table of one of the nodes in the DHT. Essentially, the finger table is a type of collection of shortcuts to move throughout the DHT ring. Thus, the finger table may be used to minimize a number of hops needed to locate a resource in the overlay DHT network.

The structure of a DHT ring topology has to be maintained. This includes keeping track of predecessors, successors, its liveliness, and also keep an up-to-date finger table. To maintain the DHT ring, neighbors may send keep-alive messages to each other checking if a neighbor is still online. If a peer leaves a network the overlay network has to adapt to such changes. Such changes may include, for instance, a predecessor and successor of a peer become immediate neighbors; one of the neighbors become responsible for a pool of data IDs that a peer that left the DHT network was responsible for; if the overlay network uses a replication mechanism for data protection, the node that takes responsibility for the pool of data IDs that were stored in the node that left the network has to update its database storing data IDs and associated data; and/or the peers in the overlay that had a pointer to the peer that left the network in their finger tables should update their finger tables.

This introduces an additional traffic overhead between peers and requires additional processing power needed to modify information about neighbors and finger tables. When a peer joins the overlay network (for first time or after leaving a network) the overlay has to perform even more operations than in the case when a peer leaves a network. Additionally, updates to the DHT do not take place immediately after a node has gone. It may take some time until all the data is again in the proper place, including the re-creation of the finger table.

In one instance, a peer-to-peer session initiation protocol (P2PSIP) network may be based on DHT and two types of entities may exist. The first entity would be a peer(s), which would maintain a P2PSIP overlay network by running a DHT protocol and store user data (for instance, contact information: session initiation protocol (SIP) to Internet protocol (IP) mapping), which in principle would provide a PUT method and a GET method. The PUT method would allow storing of data in the overlay DHT network. The GET method would allow data retrieval from the overlay DHT network. The second entity would be a client(s), which connect to peers and allow users to put/get information to/from the overlay network. SIP user agent (UA) may be collocated with a peer or a client. Among others the peers may also be collocated with (act as) SIP proxies, media relays and NAT traversal servers.

In one instance, P2PSIP data stored in the overlay network may represent SIP registration data, such as SIP uniform resource identifier (URI) to IP address binding. Data ID is a hashed SIP URI. In P2PSIP, user's reachability data stored in the DHT is much more critical (particular to timing variances) than the content stored in the DHT of file sharing networks because the P2PSIP data has to be available all of the time and be accessible in real time.

Therefore, in a network, such as a P2PSIP network, in which it is of utmost importance that the data is accurate, requires that changes to the data or the DHT ring structure (such as when a peer leaves the DHT) are propagated in real-time to the rest of the peers that need that information.

Mobile terminal or any other similar type of mobile device, for instance, moves from one network to another by doing handovers between different access networks or moving from one WLAN access point to another, which may cause network instability and require additional resources to handle network adaptation. Such network adaptation need may also impact the battery life of the mobile terminal and system reliability. In the transition period search delay for user contact information may be significantly higher, thereby delaying call establishment.

Accordingly, a node and method are provided in accordance with various embodiments of the present invention in which peer-to-peer node identifiers are allocated independently from associated Internet Protocol (IP) addresses for each peer or node in a network, such as a distributed hash table (DHT) network.

Accordingly, some embodiments of the present invention address mobility aspects in P2PSIP. For instance, mobile terminals may act as P2PSIP peers, which have intermittent connectivity and multiple access network capabilities.

Whenever a peer changes its access network (e.g., from WCDMA to WLAN), its IP address also changes. Because of this, its peer ID changes as well, provoking instability in the DHT ring. According to one aspect of this invention, peer IDs may be statically allocated and its allocation is not dependent on the corresponding peer IP address. Rather than creating the peer ID by hashing the corresponding IP address, which is no longer static for the duration of the connection to the DHT, in accordance with an embodiment of the present invention, statically allocated unique (within a DHT ring) peer IDs are configured. The IP address may also change due to reasons other than changing access network, such as, for example, if the node obtains a new address from DHCP.

When a mobile device associated with a peer moves to another subnet or access network after a handover, the peer receives a new IP address for the mobile device. In accordance with an aspect of the invention, because the peer ID is configured not to change, the peer ID would not provoke instability to the DHT ring. However, the peer would need to inform the neighboring peers about a new IP address associated with the other subnet. To each neighbor, the peer would transmit the existing peer ID, the new IP address, and, if so configured, authentication data (for example, a certificate). Each neighbor, in turn, would authenticate the update request and store the new IP address bound to that peer ID. If the peer informs the neighbors before a keepalive interval or a predetermined time interval expires, there is no need to execute a reconfiguration of the DHT network. Each peer would inform each neighboring peer about changes to their IP address. The keepalive interval or the predetermined time interval may be defined during initialization and may be configured based on a particular application, or it may adapt to a churn rate of the DHT in which case unnecessary keepalive messages may be eliminated.

According to another aspect of this invention, a peer may inform other peers that store pointers to this peer in their respective finger tables about the changes to the peer's IP address. This operation reduces the search delay because the connectivity information stored in the finger tables is kept up to date.

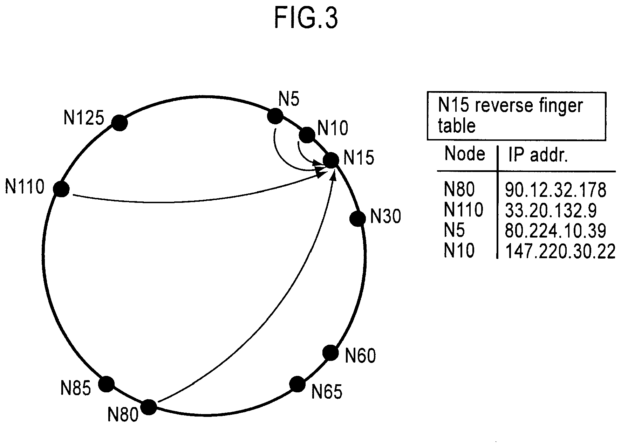

FIG. 3 illustrates a reverse finger table at a node in the DHT ring, in accordance with an embodiment of the present invention. When a first peer is creating its finger table, the peer would select a number of peers and insert their node IDs and IP addresses into the first peer's finger table. In accordance with an embodiment of the present invention, this process may be extended so that the first peer (N15) may notify those selected nodes or peers (N80, N110, N5, and N10) that they have been inserted into N15 finger table. On doing so, each notified peer (N80, N110, N5, and N10) creates a reverse finger table of nodes that are storing information about the peer as illustrated in FIG. 3. If any of the notified peers (N80, N110, N5, and N10) changes its IP address at some point in time; the selected peer will notify the first peer and other peers that are listed in its reverse finger table, so that they can update their respective finger tables. In accordance with an embodiment of the present invention, the creation of the reverse finger table at the first peer or at any of the selected peers may be executed in the background, at a lower priority, or when the network is less congested.

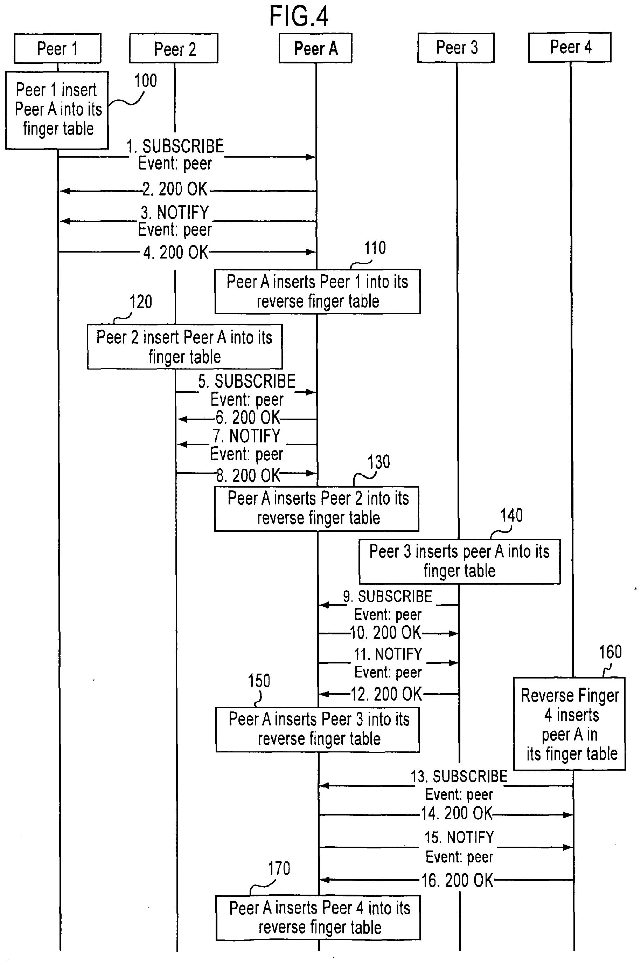

FIG. 4 illustrates a configuration in which a number of peers subscribe to a peer event state package of a peer, in accordance with an embodiment of the present invention. Several peers or nodes are building their corresponding finger tables. As shown in step 100, Peer 1 is configuring its own finger table. Peer 1 inserts an ID and corresponding IP address of Peer A into its finger table and sends an indication to Peer A, which can be realized in one embodiment with a subscription with the Session Initiation Protocol.

The infrastructure of the Session Initiation Protocol (SIP) is defined in Internet Engineering Task Force (IETF) RFC3261 (Rosenberg et al., June 2002). In general, the SIP is an application-layer control (signaling) protocol for creating, modifying and terminating sessions with one or more participants. The sessions can include Internet telephone calls, multimedia distribution and multimedia conferences. SIP invitations used to create sessions carry session descriptions that allow the nodes to agree on a set of compatible media types. In "SIP-Specific Event Notification," A. Roach, RFC 3265, July 2002 (referred to hereafter simply as "RFC 3265"), there is described a SIP event framework to enable event-based information provisioning to any peer or node in the Internet. Examples of this kind of information are presence, location information, content/service availability, or access-controlled SIP events.

As is discussed in RFC 3265, the general concept is that entities in the network can subscribe to resource or call state for various resources or calls in the network, and those entities (or entities acting on their behalf) can send notifications when those states change. A typical flow of messages between Peer A and Peer 1 is illustrated in steps 1-4 of FIG. 4.

In steps 1-4, compliant with RFC 3265 the subscriber or Peer 1 sends a SIP SUBSCRIBE request to Peer A. The SUBSCRIBE message header includes an appropriate event package identifier for a discovery event package. Upon reception of the subscription message, Peer A extracts the message body and parses the included semantic information of the discovery query. If the discovery query can be supported by Peer A (that is, the semantic is supported locally, or if an appropriate context query server is available to fulfill the request), Peer A confirms the subscription with a '200 OK' message and sends a NOTIFY message, compliant with RFC 3265. Peer 1 would confirm that it received the NOTIFY message by sending back '200 OK' message, compliant with RFC 3265. As illustrated in FIG. 4, similar steps are performed between Peer A and Peer 2 (steps 5-8), Peer 3 (steps 9-12), and Peer 4 (steps 13-16) as those described with respect to Peer 1. Accordingly, the descriptions of the steps performed between steps 1-4 are incorporated herein for steps 5-16. In an alternative implementation, rather than using the SIP event notification framework (SUBSCRIBE/NOTIFY), SIP PUBLISH request (RFC 3903) may be used, which does not require a previous subscription, for updating the peer details.

Upon reception of the indication or subscription at Peer A, at step 110, Peer A would configure a reverse finger table by including at least the ID and corresponding IP address of Peer 1. A person of ordinary skill in the art will appreciate that the IDs and IP addresses of other peers may be selectively included in the reverse finger table of Peer A. Selectively is intended to be defined as each peer being able to configure their associated table to include the IDs and IP addresses of either all the peers in the overlay or less.

As shown in step 120, Peer 2 is configuring its own finger table. Peer 2 inserts an ID and corresponding IP address of Peer A into its finger table and sends an indication to Peer A, which can be realized in one embodiment with a subscription with the Session Initiation Protocol. Upon reception of this indication or subscription at Peer A, at step 130, Peer A would configure a reverse finger table by including at least the ID and corresponding IP address of Peer 2. As shown in step 140, Peer 3 is configuring its own finger table. Peer 3 inserts an ID and corresponding IP address of Peer A into its finger table and sends an indication to Peer A, which can be realized in one embodiment with a subscription with the Session Initiation Protocol. Upon reception of this indication or subscription at Peer A, at step 150, Peer A would configure a reverse finger table by including at least the ID and corresponding IP address of Peer 3.

As shown in step 160, Peer 4 is configuring its own finger table. Peer 4 inserts an ID and corresponding IP address of Peer A into its finger table and sends an indication to Peer A, which can be realized in one embodiment with a subscription with the Session Initiation Protocol. Upon reception of this indication or subscription at Peer A, at step 170, Peer A would configure a reverse finger table by including at least the ID and corresponding IP address of Peer 4.

A person of ordinary skill in the art will appreciate that the IDs and IP addresses of other peers may be selectively included in the Peer 1, Peer 2, Peer 3, and/or Peer 4. Accordingly, as illustrated in FIG. 4, when a first peer is building its finger table and inserts the peer ID of a second peer in a first peer finger table, the first peer notifies the second peer, so that the second peer may also build a reverse finger table by inserting the peer ID and IP address of the first peer in the second peer reverse finger table. This may be implemented with any type of protocol framework, which may be extended with an appropriate event package (such as, peer event package). The event package defines, among other things, the data format used by the SIP event notifications. In this case, the peer event package contains information of the peer ID, IP address or URI, and/or authentication data.

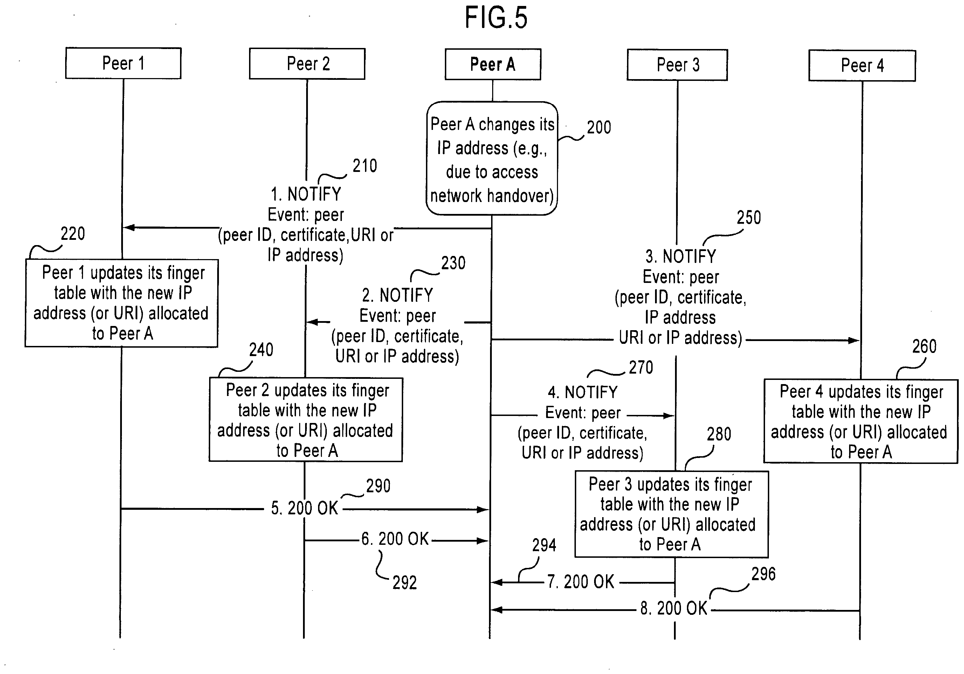

FIG. 5 illustrates a configuration to notify peers after acquiring a new IP address, in accordance with an embodiment of the present invention. According to an aspect of the invention, when a peer changes its IP address, it informs each of the subscribers. The notification may include the peer ID, the new IP address (or a URI that resolves to that IP address), and authentication data (such as a certificate).

At step 200, Peer A moves from one network to another by doing handover between different access networks or moving from one WLAN access point to another, thereby changing the IP address or URI associated thereto and obtaining a new IP address or URI, or it may obtain a new IP address for another reason. At step 210, a notification is performed in compliance with any established protocol. In an alternative implementation, rather than using the SIP event notification framework (SUBSCRIBE/NOTIFY), SIP PUBLISH request may be used, which does not require a previous subscription, for updating the peer details. Peer A transmits a notification to Peer 1 including, amongst other information, if so configured, Peer A's ID, authentication data (such as a certificate) and the new IP address. At step 220, Peer 1 authenticates Peer A using Peer A's ID and authentication data (such as a certificate), thereby confirming that Peer A is registered in the table of Peer 1. Peer 1 then updates its table with the new IP address of Peer A (or URI).

At step 230, similarly to step 210, a notification is performed in compliance with any established protocol. Peer A transmits a notification to Peer 2 including, amongst other information, if so configured, Peer A's ID, authentication data (such as a certificate) and the new IP address. At step 240, Peer 2 authenticates Peer A using Peer A's ID and authentication data (such as a certificate), thereby confirming that Peer A is registered in the table of Peer 2. Peer 2 then updates its table with the new IP address of Peer A (or URI).

Although the notification of the change in the IP address of Peer A may be performed sequentially for each associated peer, a person of ordinary skill in the art may appreciate that Peer A could be configured to simultaneously notify all the associated peers of the change or may notify in a random manner all the associated peers of the change.

For instance, rather than continuing to update Peer 3, in the embodiment described in FIG. 5, after updating the table in the Peer 2, Peer A continues by updating the table of Peer 4. At step 250, similarly to step 210, a notification is performed in compliance with an established protocol. Peer A transmits a notification to Peer 4 including, amongst other information, if so configured, Peer A's ID, authentication data (such as a certificate) and the new IP address. At step 260, Peer 4 authenticates Peer A using Peer A's ID and authentication data (such as a certificate), thereby confirming that Peer A is registered in the table of the Peer 4. Peer 4 then updates its table with the new IP address of Peer A (or URI).

At step 270, similarly to step 210, a notification is performed in compliance with established practice. Peer A transmits a notification to Peer 3 including, amongst other information, if so configured, Peer A's ID, authentication data (such as a certificate) and the new Peer A's IP address. At step 280, Peer 3 authenticates Peer A using Peer A's ID and authentication data (such as a certificate), thereby confirming that Peer A is registered in the table of Peer 3. Peer 3 then updates its table with the new IP address of Peer A (or URI). Steps 290-296 may be performed in compliance with any established protocol, where each peer in Peer A's reverse finger table would transmit a '200 OK' to Peer A.

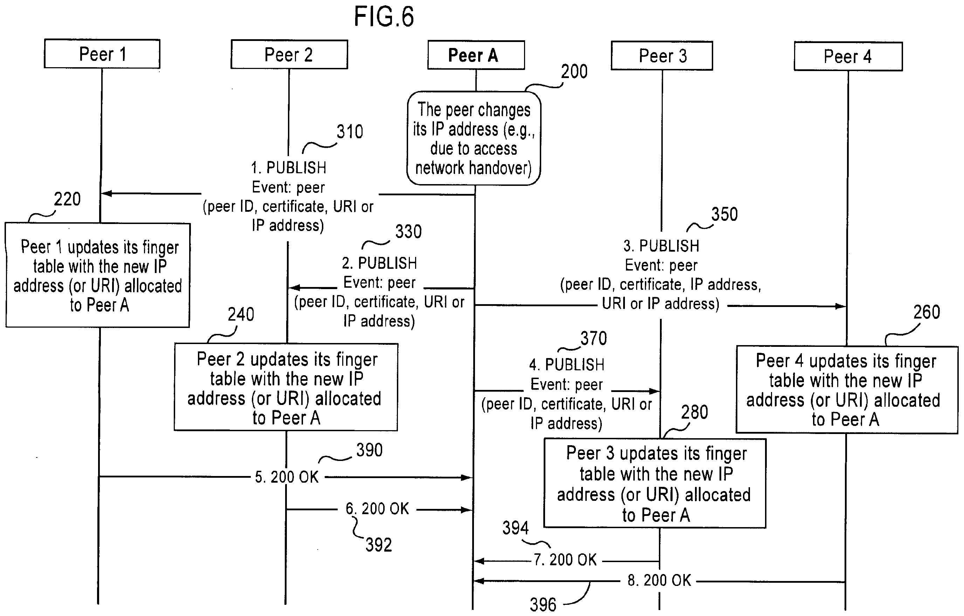

FIG. 6 illustrates an alternative session initiation protocol mechanism or method thereof to update peers, in accordance with an embodiment of the present invention. The protocol can invite participants to unicast or multicast sessions that do not necessarily involve the initiator. Because the SIP supports name mapping and redirection services, it makes it possible for users to initiate and receive communications and services from any location, and for networks to identify the users wherever they are. SIP is a request-response protocol, dealing with requests from clients and responses from servers. Participants are identified by SIP URLs. Requests can be sent through any transport protocol, such as User Datagram Protocol (UDP), Simple Control Transport Protocol (SCTP), or transmission control protocol (TCP). SIP determines the end system to be used for the session, the communication media and media parameters, and the called party's desire to engage in the communication. Once these are assured, SIP establishes call parameters at either end of the communication, and handles call transfer and termination. Accordingly, FIG. 6 shows the implementation of an alternative to the mechanism described in FIG. 5. Instead of using NOTIFY request (that are build upon a subscription), this alternative uses PUBLISH requests that are sent to the nodes in the reverse finger table. The information being exchanged in steps 310, 330, 350, 370, and 390-396 are the same as that of the NOTIFY requests in steps 210, 230, 250, 270, and 290-296 of FIG. 5, which is incorporated herein. Similarly, steps 200, 220, 240, 260, and 280 described in FIG. 5 are the same for FIG. 6, accordingly, their description are incorporated herein.

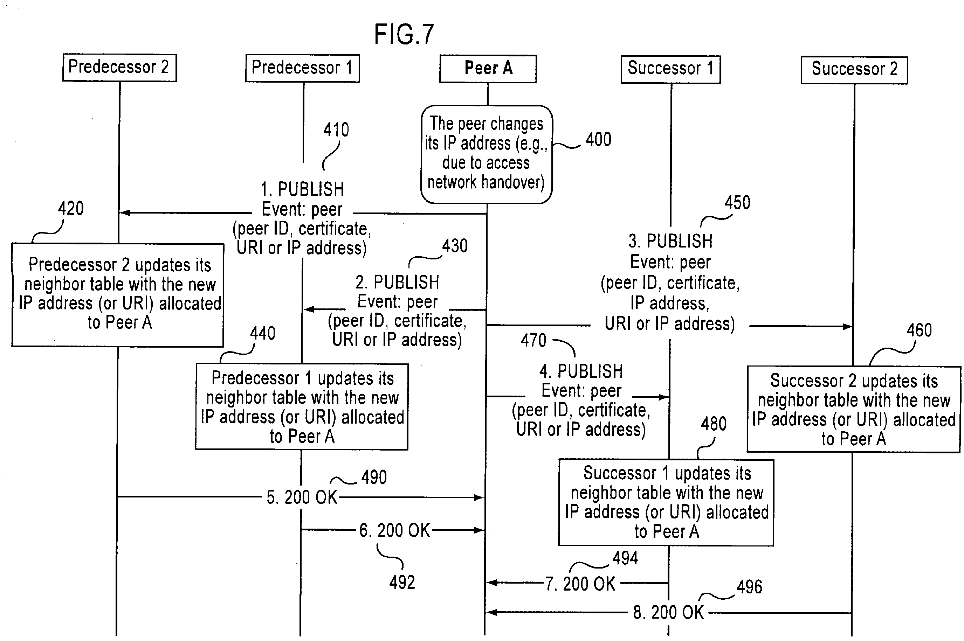

According to another aspect of the invention, a mechanism for updating the neighbor tables of a peer's neighbor is also provided. Such mechanism may be implemented with a SIP PUBLISH request. A person of ordinary skill in the art will appreciate that any other type of protocol such as SIP or HTTP protocol could be used instead of SIP PUBLISH. If implementing a SIP protocol, a SIP request may contain the peer ID, the corresponding new IP address (or a URI that resolves to that IP address), and authentication data (such as a certificate). FIG. 7 illustrates a session initiation protocol mechanism or method thereof to update neighboring peers after a change of IP address, in accordance with an embodiment of the present invention. FIG. 7 illustrates an update procedure that may use SIP PUBLISH request without a need of any subscriptions, in accordance with an embodiment of the present invention. An alternative method could use subscriptions (SUBSCRIBE/NOTIFY).

At step 400, Peer A moves from one network to another by doing handover between different access networks or moving from one WLAN access point to another, thereby changing the IP address or URI associated thereto, thereby obtaining a new IP address or URI. At step 410, a SIP PUBLISH request message, which does not require a previous subscription for updating the peer details, is sent to Predecessor 2. In an alternative implementation, rather than using SIP PUBLISH, the SIP event notification framework (SUBSCRIBE/NOTIFY) (RFC 3265) may be used. Peer A transmits a notification to Predecessor 2 including, amongst other information, Peer A's ID, authentication data (such as a certificate) and the new IP address. At step 420, Predecessor 2 authenticates Peer A using Peer A's ID and authentication data (such as a certificate), thereby confirming that Peer A is registered in the neighbor table of Predecessor 2. Predecessor 2 then updates its neighbor table with the new IP address of Peer A (or URI).

At step 430, similarly to step 410, a notification is performed in compliance with any established protocol. Peer A transmits a notification to Predecessor 1 including, amongst other information, Peer A's ID, authentication data (such as a certificate) and the new IP address. At step 440, Predecessor 1 authenticates Peer A using Peer A's ID and authentication data (such as a certificate), thereby confirming that Peer A is registered in the neighbor table of Predecessor 1. Predecessor 1 then updates its neighbor table with the new IP address of Peer A (or URI).

After updating the table in Predecessor 1, Peer A continues by updating the neighbor table of Successor 2. At step 450, similarly to step 410, a notification is performed in compliance with any established protocol. Peer A transmits a notification to Successor 2 including, amongst other information, Peer A's ID, authentication data (such as a certificate) and the new IP address. At step 460, Successor 2 authenticates Peer A using Peer A's ID and authentication data (such as a certificate), thereby confirming that Peer A is registered in the table of Successor 2. Successor 2 then updates its table with the new IP address of Peer A (or URI). Here and elsewhere in the context of this application, authentication and/or other security features are optional embodiments and practicing the present invention is not restricted to embodiments comprising such features.

At step 470, similarly to step 410, a notification is performed in compliance with an established protocol. Peer A transmits a notification to Successor 1 including, amongst other information, Peer A's ID, authentication data (such as a certificate) and the new IP address. At step 480, Successor 1 authenticates Peer A using Peer A's ID and authentication data (such as a certificate), thereby confirming that Peer A is registered in the table of Successor 1. Successor 1 then updates its table with the new IP address of Peer A (or URI). Steps 490-496 may be performed in compliance with an established protocol, where each neighboring peer would transmit a '200 OK' to Peer A.

Although the notification of the change in the IP address of Peer A may be performed sequentially for each associated neighboring peer, a person of ordinary skill in the art may appreciate that Peer A could be configured to simultaneously notify all the associated predecessors or successors of the change or may notify in a random manner all the associated neighboring peers of the change.

Accordingly, as illustrated in FIG. 7, after a change of IP address in Peer A, the node informs its neighbors of its new IP address. It does so by sending a SIP PUBLISH request message to each neighbor. The PUBLISH request includes a body that contains the notifier's peer ID, the new IP address or URI that resolves to that IP address, and authentication data. Upon reception of this PUBLISH request, the neighbor authenticates the peer combination (with a certificate), and updates its neighbor table with the new updated information.

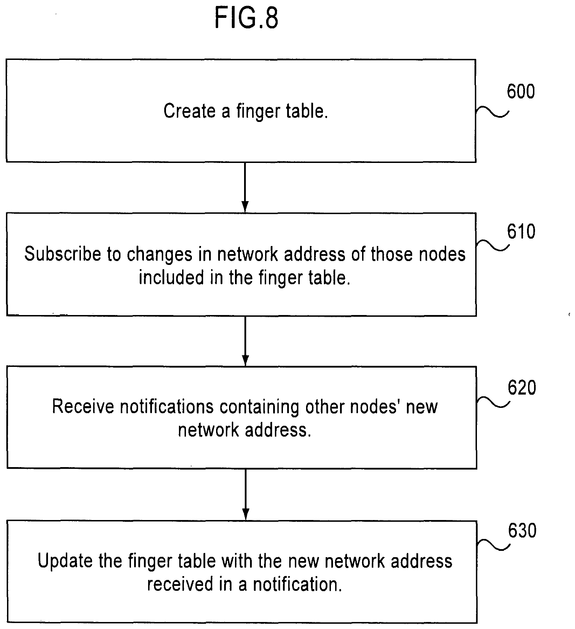

FIG. 8 illustrates a method in which nodes subscribe to a node event state package of a node, in accordance with an embodiment of the present invention. At step 600, the method includes creating a finger table in a node. At step 610, the method subscribes to changes in a network address of at least one other node included in the finger table. At step 620, the method receives at the node at least one notification including an identifier and a network address of the at least one other node. At step 630, the method updates the finger table with a new network address of the at least one other node received in the notification.

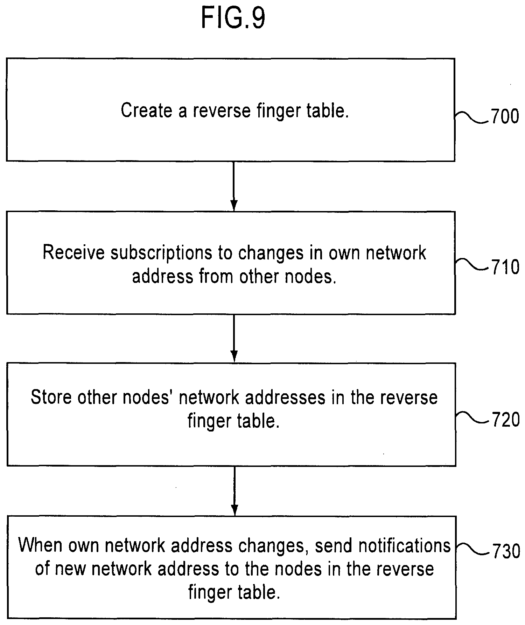

FIG. 9 illustrates a method to configure a reverse finger table, in accordance with an embodiment of the present invention. At step 700, the method creates a reverse finger table at a node. At step 710, the method receives subscriptions to changes in own network address from at least one other node. At step 720, the method stores the network address of the at least one other node in the reverse finger table. At step 730, when the network address, or other corresponding connectivity information, of the node changes, the method sends a notification of a new network address from the node to the at least one other node stored in the reverse finger table.

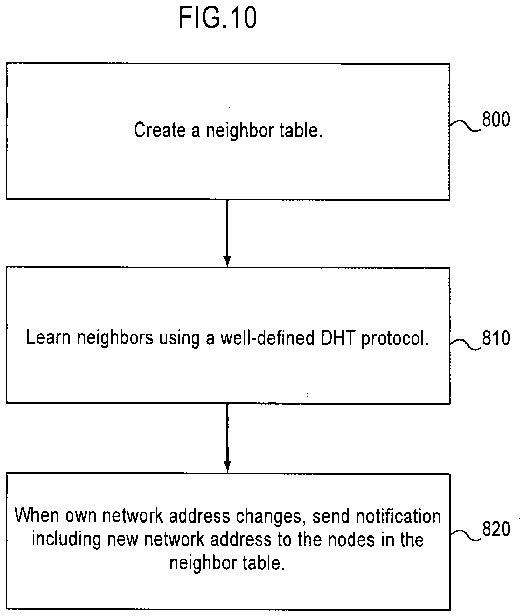

FIG. 10 illustrates a method to notify of neighboring nodes after acquiring a new address by the node, in accordance with an embodiment of the present invention. At step 800, the method creates a neighbor table at a node. At step 810, the method learns network identifiers and/or network addresses of neighbor nodes using, for instance, a well-defined DHT protocol. At step 820, when the network address of the node changes, the method sends a notification of a new network address from the node to the at least one other neighbor node stored in the neighbor table.

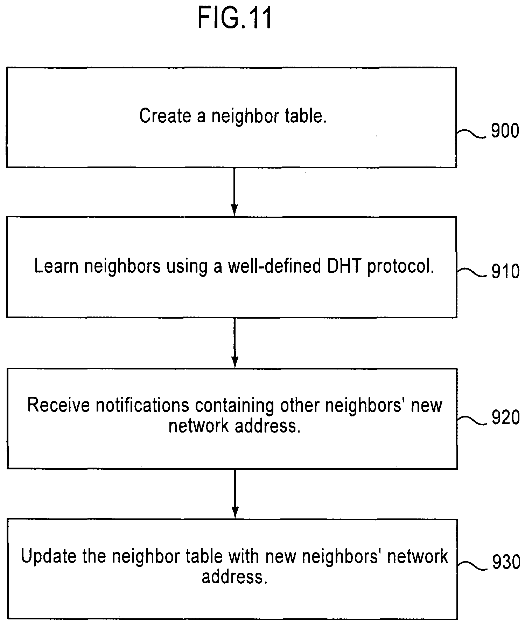

FIG. 11 illustrates a method to receive a new address of a neighboring node and update a neighbor table, in accordance with an embodiment of the present invention. At step 900, the method creates a neighbor table at a node. At step 910, the method learns network identifiers and/or network addresses of neighbor nodes using, for instance, a well-defined DHT protocol. At step 920, the method receives a notification of a new network address from the node to the at least one other neighbor node stored in the neighbor table. At step 930, the method updates the neighbor table of the at least one other neighbor node with the new network address from the node.

Some of the many advantages of the present invention include minimizing overlay network instability, minimizing overhead traffic and usage of resources, for instance, battery power, required to handle network reconfiguration, and reducing a search delay in the case of network churn, such as peers joining and/or leaving the overlay DHT network.

In view of the foregoing, in accordance with various embodiments of the present invention, there is provided a node and method configuring, providing, and maintaining real-time up-to-date peer identification and Internet protocol address mapping information in peer nodes of a distributed hash table network architecture.

It is to be understood that in the embodiment of the present invention, the steps are performed in the sequence and manner as shown although the order of some steps and the like may be changed without departing from the scope of the present invention. In addition, the methods described in FIGS. 4-9 may be repeated as many times as needed.

In accordance with an embodiment of the present invention, a computer program product embodied on a computer-readable medium may also be provided, encoding instructions for performing at least the method described in FIGS. 4-9, in accordance with an embodiment of the present invention. The computer program product can be embodied on a computer readable medium. The computer program product can include encoded instructions for processing the tunnelling transmission for a wireless multihop wireless system, which may also be stored on the computer readable medium.

The computer program product can be implemented in hardware, software, or a hybrid implementation. The computer program product can be composed of modules that are in operative communication with one another, and which are designed to pass information or instructions to a communications device such as a user equipment or network node. The computer program product can be configured to operate on a general purpose computer or an application specific integrated circuit (ASIC).

In accordance with an embodiment of the present invention, a device communicating with a node or peer may include any type of mobile or non-mobile network element including, but not limited to, a mobile station, a laptop, a user equipment, a wireless transmit/receive unit, a fixed or mobile subscriber unit, a mobile telephone, a computer (fixed or portable), a pager, a personal data assistant or organizer, or any other type of network element capable of operating in a wireless environment or having networking capabilities. For instance, if the device is a laptop, when the laptop is switched on, scans for available networks and their supported services (including location configuration protocol). The laptop can then have a profile listing the criteria for the selection from the available networks. The laptop can automatically select the network which matches better with the profile. Once the laptop has to move, it may be switched off and then again on at the new location, where the method described herein is repeated.

In addition, while the term data has been used in the description of the present invention, the invention has import to many types of network data. For purposes of this invention, the term data includes packet, cell, frame, datagram, bridge protocol data unit packet, packet data and any equivalents thereof.

The many features and advantages of the invention are apparent from the detailed specification and, thus, it is intended by the appended claims to cover all such features and advantages of the invention which fall within the scope of the invention. Further, since numerous modifications and changes will readily occur to those skilled in the art, it is not desired to limit the invention to the exact construction and step illustrated and described, and accordingly all suitable modifications and equivalents may be resorted to, falling within the scope of the invention.

## Claims

1. A node, comprising:
means for creating (600) a finger table, wherein the finger table comprises an identifier and a corresponding address of at least one node not neighboring the node; and **characterized by** comprising:
means for explicitly subscribing (610) to changes in a network address of at least one other node included in the finger table using a session initiation protocol subscribe request;
means for receiving (620), in dependence on said subscribing, at least one notification including an identifier and a network address of the at least one other node; and
means for updating (630) the finger table with the new network address of the at least one other node received in the at least one notification.

2. The node as recited in claim 1, wherein the node notifies all nodes that store pointers to the node in reverse tables that the address of the node has changed.

3. The node as recited in claim 1, wherein the at least one notification further comprises authentication data to authenticate the at least one node transmitting the notification.

4. A node, comprising:
means for creating (700) a reverse finger table, wherein the reverse finger table comprises an identifier and a corresponding address of at least one node not neighboring the node; and **characterized by** comprising:
means for receiving explicit subscriptions (710) to changes in a network address of the node from at least one other node, wherein said explicit subscriptions are received using a session initiation protocol subscribe request;
means for storing (720) the network address of the at least one other node in the reverse finger table; and
means for sending (730), in dependence on said subscribing, a notification of a new network address from the node to the at least one other node in the reverse finger table when the network address of the node changes.

5. The node as recited in claim 4, wherein the node notifies all nodes that store pointers to the node that the address of the node has changed.

6. The node as recited in claim 4, wherein the notification further comprises authentication data to authenticate the node at least one other node.

7. A method, comprising:
creating (600) a finger table at a node;
configuring the finger table to comprise an identifier and a corresponding address of at least one node not neighboring the node; and **characterized by** comprising:
explicitly subscribing (610) to changes in a network address of at least one other node included in the finger table using a session initiation protocol subscribe request;
receiving (620), in dependence on said subscribing, at least one notification including an identifier and a network address of the at least one other node; and
updating (630) the finger table with a new network address of the at least one other node received in the at least one notification.

8. The method as recited in claim 7, further comprising:
notifying all nodes that store pointers to the node in reverse tables that the address of the node has changed.

9. The method as recited in claim 7, further comprising:
configuring the at least one notification to further comprise authentication data to authenticate the at least one node transmitting the notification.

10. A method, comprising:
creating (700) a reverse finger table at a node;
configuring the reverse finger table to comprise an identifier and a corresponding address of at least one node not neighboring the node; and **characterized by** comprising:
receiving (710) explicit subscriptions to changes in a network address of the node from at least one other node, said subscriptions being received using a session initiation protocol subscribe request;
storing (720) the network address of the at least one other node in the reverse finger table; and
when the network address of the node changes, sending (730), in dependence on said subscriptions, a notification of a new network address from the node to the at least one other node in the reverse finger table.

11. The method as recited in claim 10, further comprising:
notifying all nodes that store pointers to the node that the address of the node has changed.

## Patentansprüche

1. Knoten, aufweisend:
Mittel zum Erstellen (600) einer Fingertabelle, wobei die Fingertabelle eine Kennung und eine entsprechende Adresse mindestens eines Knotens aufweist, der nicht zum Knoten benachbart ist; und **dadurch gekennzeichnet, dass** er aufweist:
Mittel zum expliziten Anmelden (610) für Änderungen an einer Netzwerkadresse mindestens eines anderen Knotens, der in der Fingertabelle enthalten ist, unter Verwendung einer Sitzungseinleitungsprotokoll-Anmeldungsanforderung;
Mittel zum Empfangen (620) in Abhängigkeit vom Anmelden mindestens einer Meldung, die eine Kennung und eine Netzwerkadresse des mindestens einen anderen Knotens aufweist; und
Mittel zum Aktualisieren (630) der Fingertabelle mit der neuen Netzwerkadresse des mindestens einen anderen Knotens, die in der mindestens einen Meldung empfangen wird.

2. Knoten nach Anspruch 1, wobei der Knoten allen Knoten, die Zeiger auf den Knoten in umgekehrten Tabellen speichern, meldet, dass sich die Adresse des Knotens geändert hat.

3. Knoten nach Anspruch 1, wobei die mindestens eine Meldung ferner Authentifizierungsdaten aufweist, um den mindestens einen Knoten, der die Meldung sendet, zu authentifizieren.

4. Knoten, aufweisend:
Mittel zum Erstellen (700) einer umgekehrten Fingertabelle, wobei die umgekehrte Fingertabelle eine Kennung und eine entsprechende Adresse mindestens eines Knotens aufweist, der nicht zum Knoten benachbart ist; und **dadurch gekennzeichnet, dass** er aufweist:
Mittel zum Empfangen expliziter Anmeldungen (710) für Änderungen an einer Netzwerkadresse des Knotens von mindestens einem anderen Knoten, wobei die expliziten Anmeldungen unter Verwendung einer Sitzungseinleitungsprotokoll-Anmeldungsanforderung empfangen werden;
Mittel zum Speichern (720) der Netzwerkadresse des mindestens einen anderen Knotens in der umgekehrten Fingertabelle; und
Mittel zum Senden (730) in Abhängigkeit vom Anmelden einer Meldung einer neuen Netzadresse vom Knoten an den mindestens einen anderen Knoten in der umgekehrten Fingertabelle, wenn sich die Netzwerkadresse des Knotens ändert.

5. Knoten nach Anspruch 4, wobei der Knoten allen Knoten, die Zeiger auf den Knoten speichern, meldet, dass sich die Adresse des Knotens geändert hat.

6. Knoten nach Anspruch 4, wobei die Meldung ferner Authentifizierungsdaten aufweist, um den Knoten den mindestens einen anderen Knoten zu authentifizieren.

7. Verfahren, aufweisend:
Erstellen (600) einer Fingertabelle an einem Knoten;
derartiges Konfigurieren der Fingertabelle, dass sie eine Kennung und eine entsprechende Adresse mindestens eines Knotens aufweist, der nicht zum Knoten benachbart ist; und **dadurch gekennzeichnet, dass** es aufweist:
explizites Anmelden (610) für Änderungen an einer Netzwerkadresse mindestens eines anderen Knotens, der in der Fingertabelle enthalten ist, unter Verwendung einer Sitzungseinleitungsprotokoll-Anmeldungsanforderung;
Empfangen (620) in Abhängigkeit vom Anmelden mindestens einer Meldung, die eine Kennung und eine Netzwerkadresse des mindestens einen anderen Knotens aufweist; und
Aktualisieren (630) der Fingertabelle mit der neuen Netzwerkadresse des mindestens einen anderen Knotens, die in der mindestens einen Meldung empfangen wird.

8. Verfahren nach Anspruch 7, ferner aufweisend:
Melden, dass sich die Adresse des Knoten geändert hat, an alle Knoten, die Zeiger auf den Knoten in umgekehrten Tabellen speichern

9. Verfahren nach Anspruch 7, ferner aufweisend:
derartiges Konfigurieren der mindestens einen Meldung, dass sie ferner Authentifizierungsdaten aufweist, um den mindestens einen Knoten, der die Meldung sendet, zu authentifizieren.

10. Verfahren, aufweisend:
Erstellen (700) einer umgekehrten Fingertabelle an einem Knoten;
derartiges Konfigurieren der umgekehrten Fingertabelle, dass sie eine Kennung und eine entsprechende Adresse mindestens eines Knotens aufweist, der nicht zum Knoten benachbart ist; und **dadurch gekennzeichnet, dass** es aufweist:
Empfangen (710) expliziter Anmeldungen für Änderungen an einer Netzwerkadresse des Knotens von mindestens einem anderen Knoten, wobei Anmeldungen unter Verwendung einer Sitzungseinleitungsprotokoll-Anmeldungsanforderung empfangen werden;
Speichern (720) der Netzwerkadresse des mindestens einen anderen Knotens in der umgekehrten Fingertabelle; und
Senden (730) in Abhängigkeit von den Anmeldungen einer Meldung einer neuen Netzadresse vom Knoten an den mindestens einen anderen Knoten in der umgekehrten Fingertabelle, wenn sich die Netzwerkadresse des Knotens ändert.

11. Verfahren nach Anspruch 10, ferner aufweisend:
Melden, dass sich die Adresse des Knoten geändert hat, an alle Knoten, die Zeiger auf den Knoten speichern.

## Revendications

1. Noeud comprenant :
des moyens pour créer (600) une table tactile, dans lequel la table tactile comprend un identifiant et une adresse correspondante d'au moins un noeud qui n'est pas voisin du noeud ; et **caractérisé en ce qu'**il comprend :
des moyens pour souscrire (610) de manière explicite des changements dans une adresse réseau d'au moins un autre noeud contenu dans la table tactile à l'aide d'une demande de souscription à un protocole d'ouverture de session ;
des moyens pour recevoir (620), en fonction de ladite souscription, au moins une notification comprenant un identifiant et une adresse réseau du ou des autres noeuds ; et
des moyens pour mettre à jour (630) la table tactile avec la nouvelle adresse réseau du ou des autres noeuds reçue dans la ou les notifications.

2. Noeud selon la revendication 1, dans lequel le noeud notifie à tous les noeuds qui stockent des pointeurs pour le noeud dans des tables inverses, que l'adresse du noeud a changé.

3. Noeud selon la revendication 1, dans lequel la ou les notifications comprennent en outre des données d'authentification pour authentifier le ou les noeuds qui transmettent la notification.

4. Noeud comprenant :
des moyens pour créer (700) une table tactile inverse, dans lequel la table tactile inverse comprend un identifiant et une adresse correspondante d'au moins un noeud qui n'est pas voisin du noeud ; et **caractérisé en ce qu'**il comprend :
des moyens pour recevoir des souscriptions explicites (710) de changements dans une adresse réseau du noeud en provenance d'au moins un autre noeud, dans lequel lesdites souscriptions explicites sont reçues à l'aide d'une demande de souscription à un protocole d'ouverture de session ;
des moyens pour stocker (720) l'adresse réseau du ou des autres noeuds dans la table tactile inverse ; et
des moyens pour envoyer (730), en fonction de ladite souscription, une notification d'une nouvelle adresse réseau à partir du noeud au ou aux autres noeuds dans la table tactile inverse lorsque l'adresse réseau du noeud change.

5. Noeud selon la revendication 4, dans lequel le noeud notifie à tous les noeuds qui stockent des pointeurs pour le noeud que l'adresse du noeud a changé.

6. Noeud selon la revendication 4, dans lequel la notification comprend en outre des données d'authentification pour authentifier le noeud par rapport au moins un autre noeud.

7. Procédé comprenant :
la création (600) d'une table tactile, au niveau d'un noeud ;
la configuration de la table tactile pour comprendre un identifiant et une adresse correspondante d'au moins un noeud qui n'est pas voisin du noeud ; et **caractérisé en ce qu'**il comprend :
la souscription (610) explicite de changements dans une adresse réseau d'au moins un autre noeud contenu dans la table tactile à l'aide d'une demande de souscription à un protocole d'ouverture de session ;
la réception (620), en fonction de ladite souscription, d'au moins une notification comprenant un identifiant et une adresse réseau du ou des autres noeuds ; et
la mise à jour (630) de la table tactile avec une nouvelle adresse réseau du ou des autres noeuds reçue dans la ou les notifications.

8. Procédé selon la revendication 7, comprenant en outre :
la notification à tous les noeuds qui stockent des pointeurs pour le noeud dans des tables inverses, que l'adresse du noeud a changé.

9. Procédé selon la revendication 7, comprenant en outre :
la configuration de la ou des notifications pour comprendre en outre des données d'authentification pour authentifier le ou les noeuds qui transmettent la notification.

10. Procédé comprenant :
la création (700) d'une table tactile inverse au niveau d'un noeud ;
la configuration de la table tactile inverse pour comprendre un identifiant et une adresse correspondante d'au moins un noeud qui n'est pas voisin du noeud ; et **caractérisé en ce qu'**il comprend :
la réception (710) de souscriptions explicites de changements dans une adresse réseau du noeud en provenance d'au moins un autre noeud, lesdites souscriptions étant reçues à l'aide d'une demande de souscription à un protocole d'ouverture de session ;
le stockage (720) de l'adresse réseau du ou des autres noeuds dans la table tactile inverse ; et
lorsque l'adresse réseau du noeud change, l'envoi (730), en fonction desdites souscriptions, d'une notification d'une nouvelle adresse réseau à partir du noeud au ou aux autres noeuds dans la table tactile inverse.

11. Procédé selon la revendication 10, comprenant en outre :
la notification à tous les noeuds qui stockent des pointeurs pour le noeud, que l'adresse du noeud a changé.
